# FASCICULE DE BREVET EUROPEEN

(11) **EP 2 931 654 B1**
(45) Date de publication et mention de la délivrance du brevet: **05.10.2016**
(21) Numéro de dépôt: 13805447.3
(22) Date de dépôt: 31.10.2013
(51) Int. Cl.: C01B 3/48, C01B 3/56

(54) **PROCÉDÉ POUR UNE PRODUCTION D'HYDROGÈNE PAR REFORMAGE D'HYDROCARBURES UTILISANT DE LA VAPEUR, ASSOCIÉ À UNE CAPTURE DE DIOXYDE DE CARBONE ET À UNE PRODUCTION DE VAPEUR**
VERFAHREN ZUR HERSTELLUNG VON WASSERSTOFF DURCH REFORMIEREN VON KOHLENWASSERSTOFFEN MIT WASSERDAMPF, KOMBINIERT MIT KOHLENDIOXIDABSCHEIDUNG UND DAMPFERZEUGUNG
METHOD FOR PRODUCING HYDROGEN BY REFORMING HYDROCARBONS USING STEAM, COMBINED WITH CARBON DIOXIDE CAPTURE AND STEAM PRODUCTION

(30) Priorité: 13.12.2012 FR 1262001
(43) Date de publication de la demande: 21.10.2015
(73) Titulaire: L'Air Liquide Société Anonyme pour l'Etude et l'Exploitation des Procédés Georges Claude, 75007 Paris (FR)
(72) Inventeur: DARDE, Arthur, F-75005 Paris (FR); LECLERC, Mathieu, F-75020 Paris (FR); MOREL, Thomas, F-94360 Bry sur Marne (FR)
(74) Mandataire: Conan, Philippe Claude
(86) Numéro de dépôt international: PCT/FR2013/052611
(87) Numéro de publication internationale: WO 2014/091097

(56) Documents cités:
- WO-A1-2006/054008
- WO-A1-2006/097703
- FR-A1- 2 961 802
- US-A1- 2009 230 359
- US-A1- 2010 104 499
- US-A1- 2011 085 967
- US-A1- 2011 146 991

## Description

La présente invention est relative à une production d'hydrogène avec capture de CO₂.

Ces procédés sont connus, par exemple de US2009/230359. Ce document divulgue un procédé et un dispositif pour la production d'hydrogène. Un gaz de synthèse est généré par reformage d'hydrocarbures. Ce gaz de synthèse est refroidi. Ce refroidissement est suivi par une étape de conversion à la vapeur du CO contenu dans le gaz. Après plusieurs étapes de refroidissement, l'eau est séparée et utilisée pour la génération de la vapeur pour condenser l'eau. CO2 est récupéré après une séparation. La méthode n'est pas importante, mais des procédés cryogéniques sont parmi les possibilités. Le gaz de synthèse, pauvre en CO2, est traité dans une étape PSA pour récupérer l'hydrogène. L'ordre de séparation de CO2 et le PSA peut être inversé. De la vapeur est générée à partir d'eau séparée du gaz de synthèse et d'eau fraîche. L'eau est désaérée et passe à travers plusieurs échangeurs de chaleur. Plus précisément, l'invention concerne un procédé de production d'hydrogène par reformage d'hydrocarbures utilisant de la vapeur, associé à une capture de dioxyde de carbone et à une production de vapeur, en particulier reformage à la vapeur ainsi que reformage autothermique, dans lequel on réalise un mélange des hydrocarbures à reformer avec de la vapeur pour produire la charge d'alimentation du reformage, on génère un gaz de synthèse comprenant essentiellement de l'hydrogène, du monoxyde de carbone, du dioxyde de carbone, ainsi que de la vapeur en excès, du méthane résiduel, de l'eau et des impuretés; le gaz de synthèse produit est refroidi, enrichi en H₂ et CO₂ par conversion du CO à la vapeur (réaction de « shift ») ; le gaz de synthèse enrichi est refroidi par échange de chaleur indirect avec des fluides du procédé de sorte à produire un gaz de synthèse saturé en eau et des condensats de procédé qui sont séparés du gaz de synthèse pour être utilisés dans le procédé, le gaz de synthèse saturé étant traité par adsorption à modulation de pression pour produire de l'hydrogène et un résiduaire gazeux contenant du CO₂ qui est capturé dans une unité de purification de CO₂.

Les condensats de procédé - c'est-à-dire les condensats issus du refroidissement du gaz de synthèse en sortie de réacteur de shift - peuvent être utilisés dans le procédé lui-même selon deux modes.
- Le premier mode d'utilisation met en oeuvre un stripeur de condensats ; les condensats de procédé sont traités par entrainement à la vapeur dans une colonne appelée stripeur, la vapeur chargée en impuretés en résultant étant recyclée avec un complément de vapeur de haute pureté au point de mélange (en langue anglaise « mixing point ») des hydrocarbures avec la vapeur tandis que les condensats purifiés sont utilisés pour produire de la vapeur de haute pureté via la chaudière de récupération de chaleur (en langue anglaise « waste heat boiler ») du procédé à la fois pour fournir le complément de vapeur pour le point de mélange et pour fournir de la vapeur d'export pure.
- Le second mode d'utilisation des condensats ne fait pas appel à l'entrainement à la vapeur des condensats ; les condensats de procédé sont mélangés avec de l'eau déminéralisée en appoint puis sont vaporisés puis surchauffés dans la chaudière de récupération de chaleur générant ainsi de la vapeur impure pour alimenter le point de mélange en vapeur de procédé ;
   - selon une première variante dans laquelle on souhaite produire de la vapeur d'exportation de haute pureté, celle-ci est traitée dans un circuit - distinct du circuit de production de la vapeur impure - où de l'eau déminéralisée est vaporisée, puis la vapeur est chauffée, selon les cas surchauffée, par échange de chaleur avec des fluides chauds du procédé (ou associés au procédé). Elle est envoyée pour partie en complément de vapeur au point de mélange et pour partie exportée ;
   - selon une deuxième variante, mise en oeuvre dans le cas où la vapeur d'exportation peut être de la vapeur impure, les condensats de procédé sont mélangés avec la totalité de l'eau déminéralisée, vaporisés conjointement dans la chaudière de récupération de chaleur, la vapeur étant chauffée, selon les cas surchauffée, par échange de chaleur avec des fluides chauds du procédé (ou associés au procédé) ; une partie de la vapeur impure générée est envoyée au point de mélange, la vapeur en excès est exportée.

Le terme « vapeur de haute pureté » tel qu'utilisé dans la description et dans les revendications signifie de la vapeur contenant moins de 50 ppmv d'oxygène, 50 ppmv de dioxyde de carbone, 50 ppmv de méthanol, 50 ppmv d'amines et 50 ppmv d'ammoniac.

Le terme « condensats de procédés » tel qu'utilisé dans la description et dans les revendications signifie les condensats constitués par la phase aqueuse obtenue à partir du gaz de synthèse, lors de son refroidissement final à l'issue de l'étape de conversion (shift), et récupérée par séparation.

L'invention s'applique dans le cadre de procédés de reformage à la vapeur, notamment de reformage de méthane à la vapeur grâce à un catalyseur de reformage (en langue anglaise « steam methane reforming » ou SMR) ainsi que dans le cas de procédés couplant le reformage à la vapeur et l'oxydation partielle des hydrocarbures (procédé de reformage autothermique ou ATR). Dans ce cas, les hydrocarbures sont mélangés à de la vapeur, puis ils sont partiellement oxydés dans un brûleur produisant ainsi la chaleur nécessaire à la réaction de reformage en même temps qu'un gaz pauvre en hydrogène, ce premier gaz produit est ensuite reformé à la vapeur pour fournir davantage d'hydrogène et du monoxyde de carbone. Dans ces deux cas, le reformage à la vapeur est réalisé grâce à un catalyseur de reformage.

Les procédés de reformage à la vapeur ci-dessus sont utilisés pour produire des gaz de synthèse à partir des charges hydrocarbonées gazeuses, la réaction principale étant la réaction de reformage de méthane à la vapeur ; dans le cas de charges comprenant des hydrocarbures contenant au moins deux atomes de carbone, le reformage est précédé d'un pré-reformage, lui aussi à la vapeur dont la fonction essentielle est de transformer les hydrocarbures contenant au moins deux atomes de carbone en monoxyde de carbone, hydrogène et méthane. L'obtention de gaz de synthèse (appelé aussi syngas) représente généralement une première étape dans une production finale qui peut être une production d'hydrogène, de CO ou d'un mélange H₂/CO. En fonction de la charge à reformer, de la production finale recherchée et des conditions opératoires appliquées à cet effet, les gaz de synthèse peuvent présenter des compositions différentes, mais se présentent toujours sous la forme d'un mélange contenant principalement de l'hydrogène (H₂) et du monoxyde de carbone (CO) et en proportions moindres du dioxyde de carbone (CO₂), mais aussi du méthane (CH₄) n'ayant pas réagi, de la vapeur d'eau en excès et des traces de composés divers, impuretés initialement présentes mais aussi générées lors du reformage, et dues essentiellement à la présence du catalyseur.

Pour une production finale d'hydrogène essentiellement, le gaz de synthèse produit est ensuite traité dans au moins un réacteur où a lieu la réaction de conversion du CO, dit « réacteur de shift » dans lequel le monoxyde de carbone produit lors du reformage est, sous l'action de vapeur d'eau présente dans le gaz de synthèse et en présence d'un catalyseur approprié, essentiellement transformé en hydrogène supplémentaire et en dioxyde de carbone.

Un aspect essentiel des unités de production d'hydrogène est qu'elles présentent une intégration énergétique poussée permettant l'utilisation de la chaleur disponible dans les fluides chauds de l'unité, en particulier pour la production de vapeur, la préchauffe de réactifs ou la préchauffe d'air.

En effet, sortant du reformeur à très haute température comprise entre 800 et 950°C le gaz de synthèse doit être refroidi pour être ensuite transformé. C'est ainsi qu'il subit un premier refroidissement jusqu'à une température inférieure à 400°C avant de pouvoir entrer dans un réacteur de shift ; le gaz de synthèse en sortie de réacteur de shift (ou du dernier réacteur de shift) subit de nouveau un refroidissement jusqu'à une température comprise entre 20 et 60°C, adaptée au traitement aval par adsorption et la vapeur d'eau présente est partiellement condensée. Le gaz de synthèse saturé est séparé de la phase liquide résultant de la condensation qui constitue les « condensats de procédé ».

Ces condensats de procédé qui contiennent essentiellement de l'eau sont récupérés et réutilisés pour produire de la vapeur grâce à de la chaleur provenant du procédé. Toute ou partie de la vapeur ainsi produite, dite vapeur procédé, est mélangée avec la charge destinée à produire le gaz de synthèse dans le reformeur. Cependant, les condensats de procédé contiennent aussi des impuretés dissoutes dans l'eau, ces impuretés dissoutes étaient pour certaines présentes dans les flux alimentant le reformeur, d'autres ont été produites lors du reformage, elles proviennent cependant majoritairement de réactions dans le réacteur de shift, et sont imputables à la présence du catalyseur. Parmi les impuretés présentes dans les condensats de procédé, on trouve ainsi du dioxyde de carbone, du méthanol, de l'ammoniaque, des amines.

Ainsi qu'indiqué ci avant, en fonction du taux d'impuretés dans les condensats de procédé et des spécifications de qualité que la vapeur destinée à l'exportation doit respecter, plusieurs modes d'utilisation de ces condensats de procédé impurs sont possibles.

L'invention concerne plus particulièrement les procédés selon lesquels les condensats de procédé sont traités par entrainement à la vapeur (encore appelé stripage ou stripping en langue anglaise).

Le stripage des condensats de procédé à la vapeur permet de produire des condensats de procédé épurés et de la vapeur chargée en impuretés (on l'appelle aussi vapeur impure). Le stripage consiste en effet à provoquer l'entraînement de gaz ou de matières volatiles dissoutes dans l'eau, au moyen d'un courant gazeux ; lorsque ce gaz est de la vapeur, il s'agit donc de stripage à la vapeur.

Pour réaliser ce stripage, on utilise de la vapeur de haute pureté provenant en général d'une chaudière de récupération de chaleur (en langue anglaise « waste heat boiler ») ; il s'agit en général de la chaudière de récupération de chaleur qui utilise la chaleur du gaz de synthèse en sortie du reformeur, et participe ainsi à son premier refroidissement.

Le plus souvent saturée, la vapeur de haute pureté utilisée pour le stripage est à une pression comprise entre 15 et 70 bara, plus particulièrement entre 30 et 55 bara. La vapeur est injectée en bas du stripeur tandis que les condensats sont injectés dans la partie haute du stripeur ; la vapeur circule ainsi à contre courant du flux liquide des condensats à épurer. De cette manière, les impuretés stripables -c'est-à-dire pouvant être entrainées dans la vapeur - se retrouvent dans la vapeur en tête du stripeur. La vapeur ainsi chargée en impuretés est envoyée en totalité en amont du reformeur, en un point où elle est mélangée avec la charge à reformer. Les impuretés pourront ainsi être reformées par la suite avec le gaz naturel dans le reformeur.

Un complément de vapeur de haute pureté en provenance de la chaudière de récupération de chaleur située en aval de la zone de reformage est aussi injecté au point de mélange pour obtenir le ratio de débit de vapeur par rapport au débit d'hydrocarbures nécessaire au fonctionnement et à l'optimisation de l'unité.

Un second aspect -essentiel lui-aussi- relatif aux installations de production d'hydrogène concerne la capture du CO₂ produit par ces installations. En effet, si dans les décennies précédentes, le dioxyde de carbone était simplement séparé de l'hydrogène et généralement envoyé à l'atmosphère, la mise en évidence du réchauffement climatique et du rôle qu'il y joue a conduit à assurer la capture du CO₂ produit conjointement avec l'hydrogène.

Une installation de production d'hydrogène à échelle industrielle représente une source importante d'émission de CO₂, et en améliorer à la fois la conception et le fonctionnement dans le but de réduire les émissions de CO₂ d'origine humaine dans l'atmosphère est donc devenu critique pour les producteurs d'hydrogène. C'est pourquoi des procédés et des technologies ont été développés pour capturer le dioxyde de carbone afin à la fois de réduire les émissions de CO₂ et d'améliorer les installations de production d'hydrogène, en terme de coût et de performance.

Les émissions de dioxyde de carbone des installations de production d'hydrogène peuvent être réduites en utilisant plusieurs techniques de séparation différentes afin d'extraire le CO₂ contenu dans les fumées, le syngas ou les gaz résiduaires issus du procédé. Le CO₂ ainsi capturé peut par la suite être comprimé, transporté et séquestré dans des stockages souterrains, utilisé pour la récupération assistée du pétrole ou à des fins industrielles ou de consommation.

Les techniques mises au point pour la capture du dioxyde de carbone utilisent essentiellement les procédés cryogéniques, membranaires, d'adsorption ou d'absorption physique et/ou chimique ; le choix de la technologie dépend en particulier de la composition du gaz soumis à la capture, mais aussi des coûts de l'électricité, de la vapeur, des coûts d'investissement et des taxes (carbone) appliquées.

L'hydrogène est largement utilisé industriellement et notamment par l'industrie du pétrole et du raffinage pour différents procédés. Lors du reformage à la vapeur, la charge d'hydrocarbures est une charge gazeuse, en général du gaz naturel ou un mélange d'hydrocarbures légers dont le constituant principal est le méthane. Dans la suite de la description, dans un objectif de simplicité, on citera l'exemple du gaz naturel (GN). La charge d'alimentation subit en général un prétraitement destiné à éliminer les sulfures présents pour ne pas empoisonner les catalyseurs qui seront utilisés lors du reformage. La réaction de reformage fortement endothermique se produit à température et pression élevées (800 à 950°C et 13,5 à 55 bara). La chaleur nécessaire à la réaction de reformage du méthane est fournie:
- dans le cas d'un reformage de type reformage de méthane à la vapeur (SMR) par la combustion de gaz combustible - gaz naturel d'alimentation et gaz résiduaire du procédé (en général issu d'un gaz résiduaire de PSA) essentiellement - avec de l'air dans la zone de combustion produisant ainsi des fumées à température très élevée ;
- dans le cas d'un reformage auto thermique (ATR) par l'oxydation partielle de la charge d'alimentation -dans ce cas le gaz résiduaire de PSA est classiquement brûlé pour produire de la vapeur dans une chaudière dédiée.

Le syngas résultant du reformage est lui aussi très chaud, et une partie de la chaleur disponible est utilisée pour chauffer de l'eau de chaudière (appelée en langue anglaise waste heat boiler) afin de produire de la vapeur.

Le syngas refroidi une première fois peut être envoyé à un réacteur pour produire de l'hydrogène additionnel à partir de la conversion en présence d'eau du CO en CO₂. Ce réacteur est dit « réacteur de shift » (aussi identifié en tant que réacteur WGS, abréviation de l'expression anglaise water gas shift). Suite à cette étape du procédé, la teneur en CO₂ du syngas en aval du réacteur WGS augmente, conjointement avec sa teneur en H₂.

Le syngas enrichi en H₂ et CO₂ (et appauvri en CO) est le plus souvent traité par adsorption à pression modulée dans une unité PSA H₂ pour produire un flux gazeux d'hydrogène sensiblement pur.

En même temps que de l'hydrogène presque pur, l'unité PSA H₂ produit un résiduaire de PSA (PSA off gas en langue anglaise) qui contient le CO₂ contenu dans le gaz de synthèse alimentant l'unité PSA, ainsi que le méthane n'ayant pas réagi lors du reformage, du CO n'ayant pas réagi lors de l'étape de conversion et une partie de l'hydrogène alimentant l'unité PSA. En raison de la présence de gaz à forts pouvoirs calorifiques (méthane, monoxyde de carbone et hydrogène), le résiduaire de PSA est habituellement envoyé en tant que combustible vers les brûleurs du SMR ou de la chaudière dédiée dans le cas d'un ATR.

Le résiduaire de PSA est le courant gazeux le plus riche en CO₂ du procédé décrit ci-avant (typiquement 40-55% en l'absence de capture en amont) ; le résiduaire est disponible à une pression inférieure à 2bara. Grace à cette teneur relativement élevée en CO₂, la solution de la capture de CO₂ par voie cryogénique peut être appliquée au résiduaire de PSA.

La capture de CO₂ par voie cryogénique (CPU) fait appel à la condensation partielle et/ou à la distillation du CO₂ contenu dans le flux gazeux riche en CO₂ dans une unité de purification cryogénique (CPU pour « cryogenic purification unit » en langue anglaise). A noter que la condensation partielle s'effectuant sous pression, la littérature fait aussi référence à la dualité purification/compression en remplacement de la dualité purification/cryogénie pour la même abréviation CPU, et la même opération. Le gaz, après séchage et compression jusqu'à une pression comprise entre 20 et 100 bara, est refroidi jusqu'à une température proche de celle du point triple du CO₂ (environ -56°C). Dans ces conditions de température et de pression, il va se condenser partiellement, la phase liquide étant particulièrement enrichie en CO₂ et la phase gazeuse en gaz incondensables. Le liquide obtenu peut ensuite être distillé pour atteindre des puretés en CO₂ supérieures à 99%.

Un procédé de capture de CO₂ par CPU - appliqué au résiduaire du PSA - fonctionne selon le schéma suivant : le flux gazeux de résiduaire est comprimé et séché de sorte que sa pression soit comprise entre 20 et 100 bara environ, puis il subit une ou plusieurs étapes successives de condensation/séparation dans l'unité CPU pour produire un flux liquide enrichi en CO₂ et un flux gazeux (résiduaire de capture) enrichi en hydrogène et en autres constituants plus légers que le CO₂ et donc incondensables dans les conditions opératoires, notamment CH₄, H₂ et CO. Les étapes de condensation/séparation peuvent être complétées par des étapes de séparation membranaires.

Lors de l'étape de compression précédant l'étape de séchage, l'eau contenue dans le résiduaire gazeux va partiellement se condenser avec une partie des impuretés contenues dans le gaz solubles dans l'eau. La pression lors de l'étape de séchage est comprise entre 1 et 50 bara, la pression des condensats formés est par conséquent comprise entre 1 et 50 bara environ. Formés dans l'unité CPU, ils sont dans la description et dans les revendications désignés comme « condensats CPU ». Les condensats CPU sont séparés préalablement à la séparation/condensation du CO₂ et sont évacués en tant qu'eaux usées vers une station de traitement qui peut être une station de traitement des eaux usées du site industriel où est installée la CPU, mais sera plus souvent une station de traitement dédiée ; en l'absence de station de traitement des eaux usées disponible pour traiter ces condensats supplémentaires, ou si la station déjà présente n'est pas apte à traiter les condensats de la CPU en raison de leur composition -en particulier, la présence de méthanol dans les condensats de CPU est très gênante, car c'est un puissant bactéricide qui limite voire rend impossible un traitement par dégradation bactérienne communément utilisé pour le traitement des eaux usées. Une installation de traitement de ce type de condensats est relativement coûteuse car difficile à mettre en oeuvre, particulièrement du fait de la présence dans les condensats de méthanol.

Il est donc souhaitable d'employer une technique pour traiter ces condensats plus économique et surtout moins sensible à la teneur en méthanol La solution selon l'invention consiste à intégrer le traitement des condensats en provenance de la CPU au procédé de production d'hydrogène ; plus précisément, il s'agira selon l'invention d'associer le traitement des condensats de CPU à celui des condensats de procédé issus du refroidissement du gaz de synthèse tel que décrit ci-avant.

Cette solution, intégrée au procédé présente en outre, les adaptations et des variantes avantageuses suivant les situations, c'est ainsi que :
- le nombre total d'équipements de traitement de condensats n'est pas augmenté - pas d'équipement pour le traitement des condensats de CPU avant évacuation- les couts d'investissement sont donc réduits ainsi que l'empreinte au sol de l'installation ;
- les condensats de la CPU étant recyclés vers la zone de reformage, on diminue d'autant l'appoint en eau déminéralisée requise par l'unité de production d'hydrogène ;
- les composés présents dans les condensats et pouvant être incorporées à la charge sont envoyés avec la vapeur au reformage. Ils sont alors éliminés et participent à la production d'hydrogène.

Pour cela, l'invention a pour objet principal un procédé de production d'hydrogène par reformage d'hydrocarbures utilisant de la vapeur, associé à une capture de dioxyde de carbone et à une production de vapeur de haute pureté, comprenant au moins les étapes de
a) mélange des hydrocarbures à reformer avec de la vapeur pour produire la charge d'alimentation du reformage,
b) génération par reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
c) premier refroidissement du gaz de synthèse,
d) génération d'un gaz de synthèse enrichi en H₂ et CO₂ par conversion à la vapeur du CO contenu dans le gaz de synthèse refroidi issu de l'étape c),
e) refroidissement du gaz de synthèse enrichi en H₂ et CO₂ issu de l'étape d) par échange de chaleur indirect jusqu'à une température de l'ordre de la température ambiante, au moins inférieure à 60°C et de préférence inférieure ou égale à 40°C, de sorte à produire un gaz de synthèse saturé et des condensats C1,
f) séparation des condensats C1 d'avec le gaz de synthèse saturé issu de e),
g) traitement du gaz de synthèse issu directement ou indirectement de l'étape f) dans une unité de purification d'hydrogène par adsorption à pression modulée, de sorte à produire un courant d'hydrogène d'une pureté d'au moins 99 % et un courant résiduaire gazeux contenant au moins 40% de CO₂,
h) traitement du courant résiduaire gazeux de PSA issu de l'étape g) dans une unité CPU produisant au moins un courant de CO₂ purifié et au moins un courant d'incondensables,
   ainsi que des étapes de traitement de tout ou partie des condensats C1 issus du procédé comprenant au moins les étapes de :
   k1) pompage des condensats C1 à une pression comprise entre 15 et 90 bara, de préférence entre 25 et 70 bara,
   k2) chauffage des condensats C1 sous pression à une température comprise entre 150 et 290 °C, de préférence entre 200 et 280 °C,
   k3) stripage à la vapeur des condensats C1 comprimés et chauffés - dans un stripeur - à l'aide de vapeur de haute pureté de sorte à produire un courant de vapeur impure en tête de colonne et un courant de condensats purifiés en bas de la colonne,
   k4) recyclage de la vapeur impure à l'étape a) pour être mélangée avec les hydrocarbures à reformer,
   k5) recyclage des condensats purifiés dans l'eau déminéralisée alimentant la production de vapeur de haute pureté associée,
ainsi que des étapes production de vapeur de haute pureté destinée à l'exportation comprenant au moins les étapes de :
v1) alimentation d'un circuit de vapeur de haute pureté associé au procédé par de l'eau déminéralisée,
v2) préchauffage de l'eau pure circulant dans le circuit par échange de chaleur indirect avec au moins un fluide du procédé,
v3) vaporisation de l'eau pure préchauffée contre le gaz de synthèse provenant du reformage dans une chaudière de récupération de chaleur,
v4) utilisation d'une partie de la vapeur de haute pureté pour l'étapek3 de stripage des condensats de procédé,
v5) recyclage d'une partie de la vapeur de haute pureté à l'étape a) pour être mélangée avec les hydrocarbures à reformer,
v6) mise à disposition de vapeur de haute pureté pour l'exportation,
caractérisé en ce que l'étape de traitement h) produit en outre au moins un courant de condensats C2, et les condensats C2 sont récupérés et recyclés dans le procédé en amont de l'étape k3) d'entrainement à la vapeur pour être traités conjointement avec les condensats C1.

De la sorte, les impuretés résiduelles présentes dans les condensats C2 de la CPU sont entrainées dans la vapeur en même temps que celles des condensats C1 de procédé, et sont valorisées en tant que charge de reformage tout en récupérant les condensats purifiés dans le stripeur pour la génération de vapeur pure.

Conformément à d'autres caractéristiques avantageuses de l'invention, celle-ci peut présenter une ou plusieurs des variantes qui sont décrites ci-après.

En fonction de leur pression et de leur température, les condensats C2 issus de la CPU sont ajoutés aux condensats de procédé en amont du stripeur, en différentes localisations, après avoir subi si besoin des étapes de chauffage et/ou de pompage, via les moyens de pompage ou de chauffage des condensats C1 de procédé ou via des moyens dédiés. En effet, les condensats C1 sont à la pression du gaz de synthèse alors que la pression des condensats C2 dépend de la pression du gaz traité par la CPU. C'est ainsi que, avantageusement :
- les condensats C2 peuvent être mélangés avec les condensats C1 avant le pompage des condensats C1 ; cette variante est utilisée de préférence lorsque les condensats C2 provenant de l'unité CPU sont à une pression supérieure ou égale à celle des condensats C1 avant le pompage de ces derniers mais inférieure à la pression opératoire du stripeur et que la pompe de condensats C1 et l'échangeur de préchauffe du stripeur sont en mesure de traiter le débit supplémentaire de condensats C2 ;
- alternativement, les condensats C2 peuvent être pompés puis mélangés aux condensats C1 avant le pompage des condensats C1, ; cette variante est préférentiellement utilisée lorsque les condensats C2 provenant de l'unité CPU sont à une pression inférieure à celle des condensats C1 avant le pompage de ces derniers et que la pompe de condensats C1 et l'échangeur de préchauffe du stripeur sont en mesure de traiter le débit supplémentaire de condensats C2 ;
- alternativement, les condensats C2 sont mélangés avec les condensats C1 après le pompage mais avant le préchauffage des condensats C1 ; cette variante est privilégiée lorsque les condensats C2 provenant de l'unité CPU sont à une pression supérieure ou égale à celle des condensats C1 après le pompage de ces derniers et que l'échangeur de préchauffe du stripeur est en mesure de traiter le débit supplémentaire de condensats C2 ;
- selon une autre variante, les condensats C2 sont pompés puis mélangés avec les condensats C1 après le pompage mais avant le préchauffage des condensats C1, cette solution est préférentiellement utilisée lorsque les condensats C2 provenant de l'unité CPU sont à une pression inférieure à celle des condensats C1 avant le pompage de ces derniers et que l'échangeur de préchauffe du stripeur est en mesure de traiter le débit supplémentaire de condensats C2 ;
- alternativement, les condensats C2 sont mélangés avec les condensats C1 après le pompage et le préchauffage des condensats C1, cette variante est préférentiellement utilisée lorsque les condensats C2 provenant de l'unité CPU sont à une pression supérieure ou égale à celle des condensats C1 après le pompage et le préchauffage de ces derniers, et que la température des condensats C2 est compatible avec le bon fonctionnement du stripeur ;
- selon une autre variante, les condensats C2 sont pompés puis mélangés avec les condensats C1 après le pompage et le préchauffage des condensats C1, cette variante est avantageuse, en particulier lorsque les condensats C2 provenant de l'unité CPU sont à une pression inférieure à celle des condensats C1 après le pompage et le préchauffage de ces derniers, et que la température des condensats C2 est compatible avec le bon fonctionnement du stripeur ;
- alternativement, les condensats C2 sont préchauffés puis mélangés avec les condensats C1 après le pompage et le préchauffage des condensats C1, cette variante est préférentiellement utilisée lorsque les condensats C2 provenant de l'unité CPU sont à une pression supérieure ou égale à celle des condensats C1 après le pompage et le préchauffage de ces derniers, mais que la température des condensats C2 est trop faible pour assurer le bon fonctionnement du stripeur ;
- Selon une autre variante, les condensats C2 sont pompés puis préchauffés et finalement mélangés avec les condensats C1 après le pompage et le préchauffage des condensats C1, cette variante peut être avantageusement utilisée lorsque les condensats C2 provenant de l'unité CPU sont à une pression inférieure à celle des condensats C1 après le pompage et le préchauffage de ces derniers et que la température des condensats C2 est trop faible pour assurer le bon fonctionnement du stripeur.;

Afin d'améliorer les performances du stripage, et lorsque le stripeur est adapté, on pourra adopter avantageusement une des variantes suivantes :
- les condensats C1 et C2 sont introduits séparément dans le stripeur, l'introduction du courant de condensats le plus impur étant faite au dessus de celle du courant de condensats plus pur, cette solution est adaptée en particulier lorsque les condensats C2 provenant de l'unité CPU sont à une pression supérieure ou égale à celle du stripeur et que la température des condensats C2 est compatible avec le bon fonctionnement du stripeur ;
- les condensats C2 sont préchauffés dans un préchauffeur dédié avant introduction dans le stripeur, cette solution est adaptée en particulier lorsque les condensats C2 provenant de l'unité CPU sont à une pression supérieure ou égale à celle du stripeur mais que la température des condensats C2 est trop faible pour assurer le bon fonctionnement du stripeur ;
- les condensats C2 sont pompés avant introduction dans le stripeur, cette solution est adaptée en particuliers lorsque les condensats C2 provenant de l'unité CPU sont à une pression inférieure à celle du stripeur. Cette solution pourra être précédée selon les besoins d'une étape de préchauffage dédié.

Selon une variante avantageuse du procédé, lorsqu'une colonne de lavage à l'eau - fonctionnant à une pression comprise entre 1 et 100 bara - est utilisée pour laver le courant résiduaire gazeux du PSA, on pourra récupérer en bas de cette colonne le liquide chargé en impuretés et le recycler avec les condensats C2 de la CPU dans le procédé d'entrainement à la vapeur. Cette étape de lavage à l'eau du résiduaire gazeux du PSA est ajoutée en particulier lorsqu'un abattement élevé du méthanol et de l'ammoniac est souhaitable dans la CPU.

Selon au autre aspect de cette invention, celle-ci concerne une installation de production d'hydrogène par reformage d'hydrocarbures utilisant de la vapeur, associé à une capture de dioxyde de carbone et à une production de vapeur de haute pureté, comprenant au moins :
(i) un moyen de mélange des hydrocarbures à reformer avec de la vapeur pour produire la charge d'alimentation du reformage,
(ii) un reformeur pour le reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
(iii) au moins un échangeur de chaleur pour refroidir le gaz de synthèse,
(iv) au moins un réacteur de shift pour la conversion à la vapeur du CO contenu dans le gaz de synthèse refroidi issu de l'échangeur (iii),
(v) au moins un échangeur de chaleur pour le refroidissement du gaz de synthèse enrichi en H₂ et CO₂ produit par le réacteur de shift (iv) par échange de chaleur indirect jusqu'à une température de l'ordre de la température ambiante, au moins inférieure ou égale à 60°C, de préférence inférieure ou égale à 40°C de sorte à produire un gaz de synthèse saturé et des condensats C1,
(vi) un séparateur pour la séparation des condensats C1 d'avec le gaz de synthèse saturé issu de l'échangeur (v),
(vii) une unité de purification d'hydrogène par adsorption à pression modulée pour le traitement du gaz de synthèse issu directement ou indirectement de l'étape (vi) et la production d'un courant d'hydrogène d'une pureté d'au moins 99 % et un courant résiduaire gazeux contenant au moins 40% de CO₂,
(viii) une unité CPU pour le traitement du courant résiduaire gazeux de PSA produit par l'unité PSA (vii) et la production d'au moins un courant de CO₂ purifié et au moins un courant d'incondensables,
   ainsi que des moyens de traitement de tout ou partie des condensats C1 issus du séparateur (vi) et comprenant au moins
(ix) une pompe pour le pompage des condensats C1 à une pression comprise entre 15 et 90 bara, de préférence entre 30 et 70 bara,
(x) au moins un échangeur de chaleur pour le chauffage des condensats C1 sous pression à une température comprise entre 150 et 290 °C, de préférence entre 200 et 280 °C,
(xi) un stripeur pour l'entrainement à la vapeur des condensats C1 comprimés et chauffés à l'aide de vapeur de haute pureté de sorte à produire un courant de vapeur impure en tête de colonne et un courant de condensats purifiés en bas de la colonne,
(xii) des moyens de recyclage de la vapeur impure et de mélange avec les hydrocarbures à reformer,
(xiii) des moyens de recyclage des condensats purifiés dans l'eau déminéralisée alimentant la production de vapeur de haute pureté associée,
   ainsi que des moyens de production de vapeur de haute pureté destinée à l'exportation comprenant un circuit de production de vapeur de haute pureté, ainsi qu'au moins :
(xiv) un moyen d'alimentation du circuit de vapeur de haute pureté par de l'eau déminéralisée,
(xv) au moins un échangeur de chaleur pour le préchauffage de l'eau pure circulant dans le circuit par échange de chaleur indirect avec au moins un fluide du procédé,
(xvi) une chaudière de récupération de chaleur contre le gaz de synthèse provenant du reformage pour la vaporisation de l'eau pure préchauffée,
(xvii) des moyens d'envoi d'une partie de la vapeur de haute pureté pour le traitement pour le traitement des condensats de procédé,
(xviii) des moyens de recyclage d'une partie de la vapeur de haute pureté et de mélange avec les hydrocarbures à reformer,
(xix) des moyens de mise à disposition de vapeur de haute pureté pour l'exportation,
   caractérisé en ce que l'unité CPU produisant en outre au moins un courant de condensats C2, l'installation comprend des moyens de récupération et de recyclage des condensats C2 en amont du stripeur pour être traités conjointement avec les condensats C1.

Selon une variante avantageuse, l'installation comprend une pompe pour le pompage des condensats C2, des moyens de chauffage pour le préchauffage des condensats C2, ainsi que des moyens d'introduction du courant des condensats C2 comprimés et chauffés dans le courant de condensats C1 comprimés et chauffés.

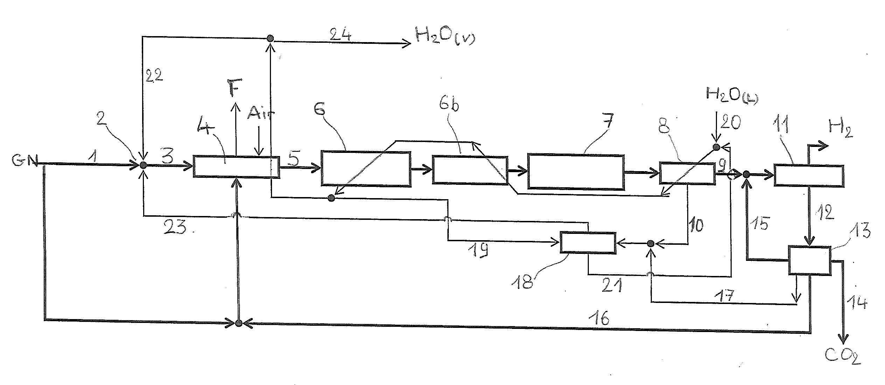

D'autres caractéristiques et avantages de l'invention apparaîtront à la lecture de la description qui va suivre. Un mode de réalisation de l'invention y est représenté sur la figure unique, et décrit ci-après à titre d'exemple non limitatif.

La Figure unique illustre ainsi un procédé dans lequel un flux 1 de gaz naturel (GN) est envoyé vers le point de mélange **2** pour y être mélangé avec deux flux de vapeur d'eau **22** et **23** produits dans le procédé. Le mode de production de ces deux flux de vapeur sera décrit par la suite. Le flux **3** résultant du mélange constitue la charge alimentant un module **4** de reformage de méthane à la vapeur (SMR), le gaz produit **5** est un gaz de synthèse comprenant essentiellement de l'hydrogène H₂ et du CO, mais aussi du CO₂, du CH₄, de l'eau et des impuretés ; le gaz **5** est refroidi par échange de chaleur avec de l'eau, d'abord dans la chaudière **6** de récupération de chaleur, où l'eau est vaporisée puis via un échangeur de chaleur **6b** puis alimente le module 7 de conversion, produisant ainsi un gaz de synthèse enrichi en H₂ et en CO₂ et appauvri en CO par rapport au gaz **5** produit par reformage, et contenant en outre des impuretés supplémentaires générées lors de la conversion -contenant ainsi de l'ordre de 65 à 85% de H₂, 11 à 22% de CO₂, 0.5 à 6% de CO non converti et 3 à 10% de CH₄.

Le gaz de synthèse est alors refroidi en **8** par échange de chaleur contre de l'eau en particulier contre de l'eau déminéralisée **20** jusqu'à une température inférieure ou égale à 60°C plus généralement inférieure ou égale à 40°C, permettant la condensation partielle de l'eau présente dans le gaz de synthèse ainsi que de certaines impuretés condensables. Le gaz de synthèse saturé **9** est séparé de la fraction liquide **10** constituée des condensats C1 de procédé impurs (c'est-à-dire chargés en impuretés entrainées avec l'eau).

Le gaz de synthèse **9** est ensuite envoyé en **11** dans l'unité PSA H₂ laquelle produit au moins un courant gazeux d'hydrogène à haute pureté (supérieure à 99%), ainsi qu'un gaz résiduaire **12** qui contient quant à lui tout le dioxyde de carbone, la très grande majorité du méthane et du monoxyde de carbone non convertis, une grande partie de l'azote et de l'hydrogène dont la quantité dépend du rendement du PSA H₂.

Le gaz résiduaire **12** est envoyé en **13** à une unité CPU pour la séparation du CO₂, l'unité CPU produisant au moins un courant **14** enrichi en CO₂, un courant gazeux **15** riche en hydrogène H₂ qui est recyclé pour alimenter le PSA H₂ afin de valoriser l'hydrogène contenu et d'améliorer ainsi le rendement hydrogène global de l'installation, un courant **16** d'incondensables comprenant du méthane, de l'hydrogène, du monoxyde de carbone, du dioxyde de carbone non condensé, de l'azote et de l'eau, constituant le résiduaire de CPU qui est recyclé en tant que combustible de reformage vers le module de reformage **4,** ainsi qu'un courant liquide **17** constitué par les condensats C2 de CPU ; produits dans l'unité CPU, au moins en partie au stade de compression/ séchage qui précède la première étape de condensation du CO₂, ces condensats de CPU (condensats C2) contiennent majoritairement de l'eau ainsi que des impuretés dissoutes comme du méthanol, de l'ammoniaque, des amines. En application du procédé de l'invention, les condensats C2 sont recyclés pour être traités avec le flux liquide **10** des condensats C1 de procédé.

Les condensats de procédé C1 forment le courant **10 ;** augmentés des condensats C2 de CPU -qui forment le courant **17-** ils sont soumis dans le stripeur **18** à un entrainement à la vapeur à contre courant d'un courant de vapeur de haute pureté **19** prélevé sur de la vapeur de haute pureté circulant dans un circuit de production de vapeur de haute pureté associé, le flux **22** de vapeur alimentant le point de mélange **2** est aussi prélevé sur le circuit de production de vapeur de haute pureté associé.

Le circuit de production de vapeur de haute pureté associé fonctionne de la manière suivante. L'eau -vapeur ou liquide- circule à une pression comprise entre 20 et 60 bara. Un apport **20** d'eau déminéralisée extérieure est assuré, auquel s'ajoutent les condensats purifiés **21** récupérés en sortie du stripeur **18;** le courant d'eau pure résultant est chauffé par échange de chaleur avec le syngas dans les échangeurs de chaleur **8** et **6b,** et vaporisé dans la chaudière de récupération de chaleur **6.** La vapeur de haute pureté saturée sortant de la chaudière est alors séparée en deux parties ; la première partie constitue le courant de vapeur de haute pureté **19** qui est envoyé vers le stripeur, la deuxième partie de la vapeur de haute pureté saturée sortant de la chaudière **6** traverse la zone de convection du reformeur où elle récupère un supplément de chaleur à partir des fumées, elle est de nouveau séparée en deux parties, l'une d'elles constitue la vapeur de haute pureté surchauffée d'export **24,** la seconde forme le flux de vapeur **22** envoyé au point de mélange **2.** Le flux **23** de vapeur alimentant le point de mélange **2** est constitué quant à lui à partir de la vapeur impure récupérée en tête du stripeur **18** qui contient les impuretés, entrainées dans la vapeur, provenant des condensats C1 de procédé et C2 de CPU.

## Revendications

1. Procédé de production d'hydrogène par reformage d'hydrocarbures utilisant de la vapeur, associé à une capture de dioxyde de carbone et à une production de vapeur de haute pureté, comprenant au moins les étapes de
a) mélange des hydrocarbures à reformer avec de la vapeur pour produire la charge d'alimentation du reformage,
b) génération par reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
c) premier refroidissement du gaz de synthèse,
d) génération, par conversion à la vapeur du CO contenu dans le gaz de synthèse refroidi issu de l'étape c) d'un gaz de synthèse enrichi en H₂ et CO₂,
e) refroidissement du gaz de synthèse enrichi en H₂ et CO₂ issu de l'étape d) par échange de chaleur indirect jusqu'à une température de l'ordre de la température ambiante, au moins inférieure ou égale à 60°C, de préférence inférieure ou égale à 40°C de sorte à produire un gaz de synthèse saturé et des condensats C1,
f) séparation des condensats C1 d'avec le gaz de synthèse saturé issu de e),
g) traitement du gaz de synthèse issu directement ou indirectement de l'étape f) dans une unité de purification d'hydrogène par adsorption à pression modulée, de sorte à produire un courant d'hydrogène d'une pureté d'au moins 99 % et un courant résiduaire gazeux contenant au moins 40% de CO₂,
h) traitement du courant résiduaire gazeux de PSA issu de l'étape g) dans une unité CPU produisant au moins un courant de CO₂ purifié et au moins un courant d'incondensables,
ainsi que des étapes de traitement de tout ou partie des condensats C1 issus du procédé comprenant au moins les étapes de
k1) pompage des condensats C1 à une pression comprise entre 15 et 90 bara, de préférence entre 30 et 70 bara,
k2) chauffage des condensats C1 sous pression à une température comprise entre 150 et 290 °C, de préférence entre 200 et 280 °C,
k3) entrainement à la vapeur des condensats C1 comprimés et chauffés - dans un stripeur - à l'aide de vapeur de haute pureté de sorte à produire un courant de vapeur impure en tête de colonne et un courant de condensats purifiés en bas de la colonne,
k4) recyclage de la vapeur impure à l'étape a) pour être mélangée avec les hydrocarbures à reformer,
k5) recyclage des condensats purifiés dans l'eau déminéralisée alimentant la production de vapeur de haute pureté associée,
ainsi que des étapes production de vapeur de haute pureté destinée à l'exportation comprenant au moins les étapes de :
v1) alimentation d'un circuit de vapeur de haute pureté associé au procédé par de l'eau déminéralisée,
v2) préchauffage de l'eau pure circulant dans le circuit par échange de chaleur indirect avec au moins un fluide du procédé,
v3) vaporisation de l'eau pure préchauffée contre le gaz de synthèse provenant du reformage dans une chaudière de récupération de chaleur,
v4) utilisation d'une partie de la vapeur de haute pureté pour le traitement des condensats de procédé
v5) recyclage d'une partie de la vapeur de haute pureté à l'étape a) pour être mélangée avec les hydrocarbures à reformer,
v6) mise à disposition de vapeur de haute pureté pour l'exportation,
**caractérisé en ce que** l'étape de traitement h) produit en outre au moins un courant de condensats C2, et les condensats C2 sont récupérés et recyclés dans le procédé en amont de l'étape k3) d'entrainement à la vapeur pour être traités conjointement avec les condensats C1.

2. Procédé selon la revendication 1 dans lequel les condensats C2 sont mélangés avec les condensats C1 avant le pompage des condensats C1.

3. Procédé selon la revendication 1 dans lequel les condensats C2 sont pompés puis mélangés aux condensats C1 avant le pompage des condensats C1.

4. Procédé selon la revendication 1 dans lequel les condensats C2 sont mélangés avec les condensats C1 après le pompage mais avant le préchauffage des condensats C1.

5. Procédé selon la revendication 1 dans lequel les condensats C2 sont pompés puis mélangés avec les condensats C1 après le pompage mais avant le préchauffage des condensats C1.

6. Procédé selon la revendication 1 dans lequel les condensats C2 sont mélangés avec les condensats C1 après le pompage et le préchauffage des condensats C1.

7. Procédé selon la revendication 1 dans lequel les condensats C2 sont pompés puis mélangés avec les condensats C1 après le pompage et le préchauffage des condensats C1.

8. Procédé selon la revendication 1 dans lequel les condensats C2 sont préchauffés puis mélangés avec les condensats C1 après le pompage et le préchauffage des condensats C1.

9. Procédé selon la revendication 1 dans lequel les condensats C2 sont pompés puis préchauffés et finalement mélangés avec les condensats C1 après le pompage et le préchauffage des condensats C1.

10. Procédé selon la revendication 1 dans lequel les condensats C1 et C2 sont introduits séparément dans le stripeur, l'introduction du courant des condensats les plus impurs étant faite au dessus de celle du courant des condensats plus purs.

11. Procédé selon la revendication 10 dans lequel les condensats C2 sont préchauffés dans un préchauffeur dédié avant introduction dans le stripeur.

12. Procédé selon la revendication 10 ou la revendication 11 dans lequel les condensats C2 sont pompés avant introduction dans le stripeur.

13. Procédé selon l'une des revendications précédentes dans lequel un lavage à l'eau étant réalisé sur le courant résiduaire gazeux du PSA, le courant liquide chargé en impuretés produit est recyclé dans le procédé en amont de l'étape k3) d'entrainement à la vapeur pour être traités conjointement avec les condensats C1 et C2.

14. Installation de production d'hydrogène par reformage d'hydrocarbures utilisant de la vapeur, associé à une capture de dioxyde de carbone et à une production de vapeur de haute pureté, comprenant au moins :
(i) un moyen de mélange des hydrocarbures à reformer avec de la vapeur pour produire la charge d'alimentation du reformage,
(ii) un reformeur pour le reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
(iii) au moins un échangeur de chaleur pour refroidir le gaz de synthèse,
(iv) au moins un réacteur de shift pour la conversion à la vapeur du CO contenu dans le gaz de synthèse refroidi issu de l'échangeur (iii),
(v) au moins un échangeur de chaleur pour le refroidissement du gaz de synthèse enrichi en H₂ et CO₂ produit par le réacteur de shift (iv) par échange de chaleur indirect jusqu'à une température de l'ordre de la température ambiante, au moins inférieure ou égale à 60°C, de préférence inférieure ou égale à 40°C de sorte à produire un gaz de synthèse saturé et des condensats C1,
(vi) un séparateur pour la séparation des condensats C1 d'avec le gaz de synthèse saturé issu de l'échangeur (v),
(vii) une unité de purification d'hydrogène par adsorption à pression modulée pour le traitement du gaz de synthèse issu directement ou indirectement de l'étape (vi) et la production d'un courant d'hydrogène d'une pureté d'au moins 99 % et un courant résiduaire gazeux contenant au moins 40% de CO₂,
(viii) une unité CPU pour le traitement du courant résiduaire gazeux de PSA produit par l'unité PSA (vii) et la production d'au moins un courant de CO₂ purifié et au moins un courant d'incondensables,
ainsi que des moyens de traitement de tout ou partie des condensats C1 issus du séparateur (vi) et comprenant au moins :
(ix) une pompe pour le pompage des condensats C1 à une pression comprise entre 15 et 90 bara, de préférence entre 30 et 70 bara,
(x) au moins un échangeur de chaleur pour le chauffage des condensats C1 sous pression à une température comprise entre 100 et 300 °C, de préférence entre 150 et 250 °C,
(xi) un stripeur pour l'entrainement à la vapeur des condensats C1 comprimés et chauffés à l'aide de vapeur de haute pureté de sorte à produire un courant de vapeur impure en tête de colonne et un courant de condensats purifiés en bas de la colonne,
(xii) des moyens de recyclage de la vapeur impure et de mélange avec les hydrocarbures à reformer,
(xiii) des moyens de recyclage des condensats purifiés dans l'eau déminéralisée alimentant la production de vapeur de haute pureté associée,
ainsi que des moyens de production de vapeur de haute pureté destinée à l'exportation comprenant un circuit de production de vapeur de haute pureté, ainsi qu'au moins :
(xiv) un moyen d'alimentation du circuit de vapeur de haute pureté par de l'eau déminéralisée,
(xv) au moins un échangeur de chaleur pour le préchauffage de l'eau pure circulant dans le circuit par échange de chaleur indirect avec au moins un fluide du procédé,
(xvi) une chaudière de récupération de chaleur contre le gaz de synthèse provenant du reformage pour la vaporisation de l'eau pure préchauffée,
(xvii) des moyens d'envoi d'une partie de la vapeur de haute pureté pour le traitement pour le traitement des condensats de procédé,
(xviii) des moyens de recyclage d'une partie de la vapeur de haute pureté et de mélange avec les hydrocarbures à reformer,
(xix) des moyens de mise à disposition de vapeur de haute pureté pour l'exportation,
**caractérisé en ce que** l'unité CPU produisant en outre au moins un courant de condensats C2, l'installation comprend des moyens de récupération et de recyclage des condensats C2 en amont du stripeur pour être traités conjointement avec les condensats C1.

15. Installation selon la revendication 14 pour la production d'hydrogène par reformage d'hydrocarbures utilisant de la vapeur, associé à une capture de dioxyde de carbone et à une production de vapeur de haute pureté comprenant une pompe pour le pompage des condensats C2, des moyens de chauffage pour le préchauffage des condensats C2, ainsi que des moyens d'introduction du courant des condensats C2 comprimés et chauffés dans le courant de condensats C1 comprimés et chauffés.

## Patentansprüche

1. Verfahren zur Erzeugung von Wasserstoff durch Kohlenwasserstoffreformierung unter Verwendung von Dampf, assoziiert mit einer Erfassung von Kohlendioxid und einer Erzeugung von Dampf hoher Reinheit, umfassend mindestens die folgenden Schritte:
a) Mischen der zu reformierenden Kohlenwasserstoffe mit Dampf, um das Rohmaterial der Reformierung zu erzeugen,
b) Erzeugen durch Reformierung eines Synthesegases, umfassend im Wesentlichen Wasserstoff, Kohlenmonoxid sowie überschüssigen Dampf, Kohlendioxid, Restmethan, Wasser und Verunreinigungen auf der Grundlage der Mischung, die aus Schritt a) stammt,
c) erstes Abkühlen des Synthesegases,
d) Erzeugen, durch Umwandlung des Dampfs von CO, das im abgekühlten Synthesegas enthalten ist, das aus Schritt c) stammt, eines mit H₂ und CO₂ angereicherten Synthesegases,
e) Abkühlen des mit H₂ und CO₂ angereicherten Synthesegases, das aus Schritt d) stammt, durch indirekten Wärmetausch bis zu einer Temperatur im Bereich der Umgebungstemperatur, mindestens weniger oder gleich 60 °C, vorzugsweise weniger oder gleich 40 °C, um ein gesättigtes Synthesegas und Kondensate C1 zu erzeugen,
f) Trennen der Kondensate C1 mit dem gesättigten Synthesegas, das aus e) stammt,
g) Behandeln des Synthesegases, das direkt oder indirekt aus Schritt f) stammt, in einer Einheit zur Reinigung von Wasserstoff durch Adsorption bei moduliertem Druck, um einen Wasserstoffstrom mit einer Reinheit von mindestens 99 % und einen gasförmigen Reststrom zu erzeugen, der mindestens 40 % CO₂ enthält,
h) Behandeln des gasförmigen Reststroms von PSA, der aus Schritt g) stammt, in einer CPU-Einheit, die mindestens einen gereinigten CO₂-Strom und mindestens einen Strom von nicht kondensierbaren Gasen erzeugt,
sowie Schritte zum Behandeln der Gesamtheit oder eines Teils der Kondensate C1, die aus dem Verfahren stammen, das mindestens die folgenden Schritte umfasst:
k1) Pumpen der Kondensate C1 bei einem Druck, der zwischen 15 und 90 bar, vorzugsweise zwischen 30 und 70 bar liegt,
k2) Erhitzen der Kondensate C1 unter Druck bei einer Temperatur, die zwischen 150 und 290 °C, vorzugsweise zwischen 200 und 280 °C liegt,
k3) Dampfdestillation der verdichteten und erhitzten Kondensate C1 - in einem Stripper - mit Hilfe von Dampf hoher Reinheit, um am Kolonnenkopf einen unreinen Dampfstrom und am Sumpf einen Strom gereinigter Kondensate zu erzeugen,
k4) Recyclen des unreinen Dampfs in Schritt a), um mit den zu reformierenden Kohlenwasserstoffen gemischt zu werden,
k5) Recyclen der gereinigten Kondensate zu dem entmineralisierten Wasser, das bei der verbundenen Erzeugung von Dampf hoher Reinheit eingesetzt wird,
sowie Schritte des Erzeugens von Dampf mit hoher Reinheit, der für den Export bestimmt ist, umfassend mindestens die folgenden Schritte:
v1) Versorgen eines Dampfkreislaufs hoher Reinheit, der mit dem Verfahren verbunden ist, durch entmineralisiertes Wasser,
v2) Vorerhitzen des in dem Kreislauf zirkulierenden reinen Wassers durch indirekten Wärmestausch mit mindestens einem Prozessfluid,
v3) Verdampfen des vorerhitzten reinen Wassers gegen das Synthesegas, das aus der Reformierung stammt, in einem Kessel zur Wiedergewinnung der Hitze, um einen Dampfstrom zu erzeugen,
v4) Verwenden eines Teils des Dampfs hoher Reinheit zur Behandlung der Prozesskondensate
v5) Recyclen eines Teils des Dampfs hoher Reinheit in Schritt a), um mit den zu reformierenden Kohlenwasserstoffen gemischt zu werden,
v6) Bereitstellen von Dampf hoher Reinheit für den Export,
**dadurch gekennzeichnet, dass** der Schritt des Behandelns h) außerdem mindestens einen Strom der Kondensate C2 erzeugt und die Kondensate C2 im Verfahren, das Schritt k3) zur Dampfdestillation vorgelagert ist, wiedergewonnen und recycelt werden, um zusammen mit den Kondensaten C1 behandelt zu werden.

2. Verfahren nach Anspruch 1, wobei die Kondensate C2 mit den Kondensaten C1 gemischt werden, bevor das Pumpen der Kondensate C1 erfolgt.

3. Verfahren nach Anspruch 1, wobei die Kondensate C2 gepumpt und dann mit den Kondensaten C1 gemischt werden, bevor das Pumpen der Kondensate C1 erfolgt.

4. Verfahren nach Anspruch 1, wobei die Kondensate C2 mit den Kondensaten C1 gemischt werden und zwar nach dem Pumpen, jedoch vor dem Vorerhitzen der Kondensate C1.

5. Verfahren nach Anspruch 1, wobei die Kondensate C2 gepumpt und dann mit den Kondensaten C1 gemischt werden und zwar nach dem Pumpen, jedoch vor dem Vorerhitzen der Kondensate C1.

6. Verfahren nach Anspruch 1, wobei die Kondensate C2 mit den Kondensaten C1 gemischt werden und zwar nach dem Pumpen und dem Vorerhitzen der Kondensate C1.

7. Verfahren nach Anspruch 1, wobei die Kondensate C2 gepumpt und dann mit den Kondensaten C1 gemischt werden und zwar nach dem Pumpen und dem Vorerhitzen der Kondensate C1.

8. Verfahren nach Anspruch 1, wobei die Kondensate C2 vorerhitzt und dann mit den Kondensaten C1 gemischt werden und zwar nach dem Pumpen und dem Vorerhitzen der Kondensate C1.

9. Verfahren nach Anspruch 1, wobei die Kondensate C2 gepumpt, dann vorerhitzt und schließlich mit den Kondensaten C1 gemischt werden und zwar nach dem Pumpen und dem Vorerhitzen der Kondensate C1.

10. Verfahren nach Anspruch 1, wobei die Kondensate C1 und C2 getrennt voneinander in den Stripper eingeleitet werden, wobei das Einleiten des Stroms der unreinsten Kondensate oberhalb des Einleitens des Stroms der reinsten Kondensate erfolgt.

11. Verfahren nach Anspruch 10, wobei die Kondensate C2 vor einem Einleiten in den Stripper in einem speziellen Vorerhitzer vorerhitzt werden.

12. Verfahren nach Anspruch 10 oder Anspruch 11, wobei die Kondensate C2 vor einem Einleiten in den Stripper gepumpt werden.

13. Verfahren nach einem der vorhergehenden Ansprüche, wobei, nachdem eine Waschung mit dem Wasser auf dem gasförmigen Reststrom des PSA durchgeführt wurde, der erzeugte Flüssigkeitsstrom, geladen mit Verunreinigungen, im Verfahren, das Schritt k3) zur Dampfdestillation vorgelagert ist, recycelt wird, um zusammen mit den Kondensaten C1 und C2 behandelt zu werden.

14. Anlage zur Erzeugung von Wasserstoff durch Kohlenwasserstoffreformierung unter Verwendung von Dampf, assoziiert mit einer Erfassung von Kohlendioxid und mit einer Erzeugung von Dampf hoher Reinheit, umfassend mindestens:
(i) Mittel zur Mischung der zu reformierenden Kohlenwasserstoffe mit Dampf, um das Rohmaterial der Reformierung zu erzeugen,
(ii) einen Reformer zur Reformierung eines Synthesegases, umfassend hauptsächlich Wasserstoff, Kohlenmonoxid sowie überschüssigen Dampf, Kohlenstoffdioxid, Restmethan, Wasser und Verunreinigungen auf der Grundlage der Mischung, die aus Schritt a) stammt,
(iii) mindestens einen Wärmetauscher, um das Synthesegas abzukühlen,
(iv) mindestens einen Shift-Reaktor für die Umwandlung in den Dampf des CO, enthalten im abgekühlten Synthesegas, das aus dem Tauscher (iii) stammt,
(v) mindestens einen Wärmetauscher zur Abkühlung des mit H₂ und CO₂ angereicherten Synthesegases, erzeugt durch den Schift-Reaktor (iv) durch indirekten Wärmetausch bis zu einer Temperatur im Bereich der Umgebungstemperatur, mindestens weniger oder gleich 60 °C, vorzugsweise weniger oder gleich 40 °C, um ein gesättigtes Synthesegas und Kondensate C1 zu erzeugen,
(vi) einen Trenner zur Trennung der Kondensate C1 mit dem gesättigten Synthesegas, das aus dem Tauscher (v) stammt,
(vii) eine Einheit zur Reinigung von Wasserstoff durch Adsorption bei moduliertem Druck, zur Behandlung des Synthesegases, das direkt oder indirekt aus Schritt (vi) stammt, und Erzeugung eines Wasserstoffstroms mit einer Reinheit von mindestens 99 % und eines gasförmigen Reststroms, der mindestens 40 % CO₂ enthält,
(viii) eine CPU-Einheit zur Behandlung des gasförmigen Reststroms von PSA, erzeugt durch die PSA-Einheit (vii), und Erzeugung von mindestens einem gereinigten CO₂-Strom und mindestens einem Strom von nicht kondensierbaren Gasen,
sowie Mittel zur Behandlung der Gesamtheit oder eines Teils der Kondensate C1, die aus dem Trenner (vi) stammen und mindestens Folgendes umfassen:
(ix) eine Pumpe zum Pumpen der Kondensate C1 bei einem Druck, der zwischen 15 und 90 bar, vorzugsweise zwischen 30 und 70 bar liegt,
(x) mindestens einen Wärmetauscher zur Erhitzung der Kondensate C1 unter Druck bei einer Temperatur, die zwischen 100 und 300 °C, vorzugsweise zwischen 150 und 250 °C liegt,
(xi) einen Stripper zur Dampfdestillation der verdichteten und erhitzten Kondensate C1 mit Hilfe von Dampf hoher Reinheit, um am Kolonnenkopf einen unreinen Dampfstrom und am Sumpf einen Strom gereinigter Kondensate zu erzeugen,
(xii) Mittel zum Recycling des unreinen Dampfs und zum Mischen mit den zu reformierenden Kohlenwasserstoffen,
(xiii) Mittel zum Recycling der gereinigten Kondensate zu dem entmineralisierten Wasser, das bei der verbundenen Erzeugung von Dampf hoher Reinheit eingesetzt wird,
sowie Mittel zur Erzeugung von Dampf hoher Reinheit, der für den Export bestimmt ist, umfassend einen Dampferzeugungskreislauf sowie mindestens Folgendes:
(xiv) ein Mittel zur Versorgung des Kreislaufs von Dampf hoher Reinheit mit entmineralisiertem Wasser,
(xv) mindestens einen Wärmetauscher zur Vorerhitzung des in dem Kreislauf zirkulierenden reinen Wassers durch indirekten Wärmestausch mit mindestens einem Prozessfluid,
(xvi) einen Kessel zur Wiedergewinnung der Hitze, der gegen das aus der Reformierung stammende Synthesegas arbeitet, zum Verdampfen des vorerhitzten reinen Wassers,
(xvii) Mittel zum Zuführen eines Teils des Dampfs hoher Reinheit der Behandlung der Behandlung der Prozesskondensate,
(xviii) Mittel zum Recycling eines Teils des Dampfs hoher Reinheit und zum Mischen mit den zu reformierenden Kohlenwasserstoffen,
(xix) Mittel zur Bereitstellung von Dampf hoher Reinheit für den Export,
**dadurch gekennzeichnet, dass**, da die CPU-Einheit außerdem mindestens einen Strom von Kondensaten C2 erzeugt, die Anlage stromaufwärts vom Stripper Mittel zur Wiedergewinnung und zum Recycling der Kondensate C2 umfasst, um zusammen mit den Kondensaten C1 behandelt zu werden.

15. Anlage nach Anspruch 14 zur Erzeugung von Wasserstoff durch Kohlenwasserstoffreformierung unter Verwendung von Dampf, assoziiert mit einer Erfassung von Kohlendioxid und einer Erzeugung von Dampf hoher Reinheit, umfassend eine Pumpe zum Pumpen der Kondensate C2, Erhitzungsmittel zur Vorerhitzung der Kondensate C2 sowie Mittel zum Einleiten des Stroms verdichteter und erhitzter Kondensate C2 in den Strom verdichteter und erhitzter Kondensate C1.

## Claims

1. A method for producing hydrogen by reforming hydrocarbons using steam, combined with carbon dioxide capture and high-purity steam production, comprising at least the following steps of:
a) mixing the hydrocarbons to be reformed with steam in order to produce the feedstock for the reforming,
b) generating, by reforming, a synthesis gas comprising essentially hydrogen and carbon monoxide, as well as excess steam, carbon dioxide, residual methane, water and impurities, starting with the mixture from step a);
c) first cooling of the synthesis gas,
d) generating a synthesis gas enriched with H₂ and CO₂ by converting CO contained in the cooled synthesis gas from step c) with steam;
e) cooling the synthesis gas enriched with H₂ and CO₂ coming from step d) by indirect heat exchange to a temperature on the order of ambient temperature, to at least less than or equal to 60 °C, preferably to less than or equal to 40 °C, so as to produce a saturated synthesis gas and condensates C1,
f) separating condensates C1 from the saturated synthesis gas coming from e),
g) treating the synthesis gas coming directly or indirectly from step f) in a hydrogen purification unit for purification by adsorption with pressure modulation, so as to produce a hydrogen stream with a purity of at least 99% and a residual gas stream containing at least 40% CO₂,
h) treating the residual PSA gas stream coming from step g) in a CPU unit producing at least one stream of purified CO₂ and at least one stream of incondensable gases,
as well as the steps of treating all or part of condensates C1 coming from the method, comprising at least the steps of:
k1) pumping condensates C1 at a pressure between 15 and 90 bara, preferably between 30 and 70 bara,
k2) heating condensates C1 under pressure at a temperature between 150 and 290 °C, preferably between 200 and 280 °C,
k3) steam stripping of the compressed and heated condensates C1- in a stripper - using high-purity steam so as to produce a stream of impure steam at the head of the column and a stream of purified condensate at the base of the column,
k4) recycling of the impure steam to step a) to be mixed with the hydrocarbons to be reformed,
k5) recycling of the purified condensates in demineralised water supplying the associated high-purity steam production,
as well as the steps of producing high-purity steam intended for exportation comprising at least the steps:
v1) supplying demineralised water to a high-purity steam circuit associated with the method,
v2) preheating the pure water circulating in the circuit by indirect heat exchange with at least one fluid of the method,
v3) vaporising the pure water preheated by the synthesis gas coming from the reforming in a heat recovery boiler,
v4) using part of the high-purity steam for treating the condensates from the method
v5) recycling part of the high-purity steam to step a) to be mixed with the hydrocarbons to be reformed,
v6) provision of high-purity steam for exportation,
**characterised in that** treatment step h) also produces at least one stream of condensates C2, and condensates C2 are recovered and recycled in the method upstream of steam stripping step k3) in order to be jointly treated with condensates C1.

2. Method according to claim 1 in which condensates C2 are mixed with condensates C1 before the pumping of condensates C1.

3. Method according to claim 1 in which condensates C2 are pumped then mixed with condensates C1 before the pumping of condensates C1.

4. Method according to claim 1 in which condensates C2 are mixed with condensates C1 after the pumping but before the preheating of condensates C1.

5. Method according to claim 1 in which condensates C2 are pumped then mixed with condensates C1 after the pumping but before the preheating of condensates C1.

6. Method according to claim 1 in which condensates C2 are mixed with condensates C1 after the pumping and the preheating of condensates C1.

7. Method according to claim 1 in which condensates C2 are pumped then mixed with condensates C1 after the pumping and the preheating of condensates C1.

8. Method according to claim 1 in which condensates C2 are preheated then mixed with condensates C1 after the pumping and the preheating of condensates C1.

9. Method according to claim 1 in which condensates C2 are pumped then preheated and finally mixed with condensates C1 after the pumping and the preheating of condensates C1.

10. Method according to claim 1 in which condensates C1 and C2 are separately introduced into the stripper, the introduction of the more impure condensates stream being made above that of the purer condensates stream.

11. Method according to claim 10 in which condensates C2 are preheated in a dedicated preheater before introduction into the stripper.

12. Method according to claim 10 or claim 11 in which condensates C2 are pumped before introduction into the stripper.

13. Method according to one of the preceding claims in which scrubbing with water is carried out on the residual gas stream from the PSA, the liquid stream loaded with product impurities is recycled in the method upstream of steam stripping step k3) to be jointly treated with condensates C1 and C2.

14. Facility for producing hydrogen by reforming hydrocarbons using steam, combined with carbon dioxide capture and high-purity steam production, comprising at least:
(i) a means of mixing the hydrocarbons to be reformed with steam in order to produce the feedstock for the reforming,
(ii) a reformer for reforming a synthesis gas, comprising essentially hydrogen and carbon monoxide, as well as excess steam, carbon dioxide, residual methane, water and impurities, starting with the mixture from step a);
(iii) at least one heat exchanger for cooling the synthesis gas,
(iv) at least one shift reactor for converting the CO contained in the cooled synthesis gas coming from the exchanger (iii) with steam,
(v) at least one heat exchanger for cooling the synthesis gas enriched with H₂ and CO₂ produced by the shift reactor (iv) by indirect heat exchange to a temperature on the order of ambient temperature, of at least less than or equal to 60 °C, preferably less than or equal to 40 °C, so as to produce a saturated synthesis gas and condensates C1,
(vi) a separator for separating condensates C1 from the saturated synthesis gas coming from the heat exchanger (v),
(vii) a hydrogen purification unit for purification by adsorption with pressure modulation for treating the synthesis gas coming directly or indirectly from step (vi) and producing a hydrogen stream with a purity of at least 99% and a residual gas stream containing at least 40% CO₂,
(viii) a CPU unit for treating the residual PSA gas stream produced by the PSA unit (vii) and producing at least one stream of purified CO₂ and at least one stream of incondensable gases,
as well as means for treating all or part of condensates C1 coming from the separator (vi) and comprising at least:
(ix) a pump for pumping condensates C1 at a pressure between 15 and 90 bara, preferably between 30 and 70 bara,
(x) at least one heat exchanger for heating condensates C1 under pressure at a temperature between 100 and 300 °C, preferably between 150 and 250 °C,
(xi) a stripper for steam stripping the compressed and heated condensates C1 using high-purity stream so as to produce a stream of impure steam at the head of the column and a stream of purified condensate at the base of the column,
(xii) means for recycling the impure steam and mixture with hydrocarbons to be reformed,
(xiii) means for recycling the purified condensates in demineralised water supplying the associated high-purity steam production,
as well as means for producing high-purity steam intended for exportation, comprising a high-purity steam production circuit, as well as at least:
(xiv) a means for supplying the high-purity steam circuit with demineralised water,
(xv) at least one heat exchanger for preheating the pure water circulating in the circuit, by indirect heat exchange with at least one fluid of the method,
(xvi) a recovery boiler for recovering heat from the synthesis gas from the reforming, for vaporising preheated pure water,
(xvii) sending means for sending a part of the high-purity steam for treating the condensates from the method
(xviii) means for recycling a part of the high-purity steam and mixture with hydrocarbons to be reformed,
(xix) means for providing high-purity steam for exportation,
**characterised in that** the CPU unit further producing at least one stream of condensate C2, the facility comprises means for recovery and recycling of condensates C2 upstream of the stripper to be treated jointly with condensates C1.

15. Facility, according to claim 14 for producing hydrogen by reforming hydrocarbons using steam, combined with carbon dioxide capture and high-purity steam production, comprising a pump for pumping condensates C2, heating means for preheating condensates C2, as well as means for introducing the stream of compressed and heated condensates C2 into the stream of compressed and heated condensates C1.
